Europäisches Patentamt

European Patent Office

Office européen des brevets

(19)

(11) EP 0 756 890 B1

(12) **EUROPÄISCHE PATENTSCHRIFT**

(45) Veröffentlichungstag und Bekanntmachung des Hinweises auf die Patenterteilung:
**17.05.2000  Patentblatt 2000/20**

(51) Int Cl.$^7$: **B01D 53/50**

(21) Anmeldenummer: **96111260.4**

(22) Anmeldetag: **12.07.1996**

(54) **Verfahren zum Abtrennen von Schwefeldioxid aus Abgas**

Process for separating sulphurdioxide from exhaust gas

Procédé pour séparer du dioxyde de soufre de gaz d'échappement

(84) Benannte Vertragsstaaten:
**DE ES GB NL**

(30) Priorität: **29.07.1995  DE 19527836**
**23.09.1995  DE 19535475**

(43) Veröffentlichungstag der Anmeldung:
**05.02.1997   Patentblatt 1997/06**

(73) Patentinhaber: **Lurgi Lentjes Bischoff GmbH**
**45136 Essen (DE)**

(72) Erfinder:
• **Makkinejad, Navid Dr.-Ing**
**51645 Gummersbach (DE)**

• **Küper, Mathias Dipl.-Ing**
**45731 Waltrop (DE)**
• **Böhm, Hildemar Dipl.-Ing**
**45968 Gladbeck (DE)**

(74) Vertreter: **Albrecht, Rainer Harald, Dr.-Ing. et al**
**Patentanwälte**
**Andrejewski, Honke & Sozien,**
**Postfach 10 02 54**
**45002 Essen (DE)**

(56) Entgegenhaltungen:
**EP-A- 0 151 398        EP-A- 0 246 758**
**EP-A- 0 295 908        EP-A- 0 406 446**
**FR-A- 2 183 955**

## Beschreibung

Die Erfindung betrifft ein Verfahren zum Abtrennen von Schwefeldioxid aus Abgas, wobei das Abgas in einem Absorptionsturm mit Meerwasser beaufschlagt wird und das mit Schwefelverbindungen beladene Meerwasser aus dem Flüssigkeitssumpf des Absorptionsturms abgezogen sowie in einem Nachreaktionsbecken mit frischem Meerwasser beaufschlagt wird.

Gasreinigungsverfahren, bei denen Meerwasser als Absorptionsflüssigkeit zur Abtrennung von Schwefeldioxid aus einem Abgasstrom eingesetzt werden, ist beispielsweise aus DE-PS 23 22 958 bekannt. Solche Verfahren haben Eingang in die Praxis gefunden und werden heute an einigen Küstenstandorten praktiziert (Verfahrenstechnik 25 (1991) Nr. 9, S. 12-14). Die Verfahren nutzen die im Meerwasser enthaltenen Bicarbonate für die Umsetzung des absorbierten $SO_2$ zu unschädlichen Sulfaten.

Der Waschflüssigkeitsbedarf in der Absorptionszone ist durch den Stoffübergang zwischen Gasphase und flüssiger Phase bestimmt. Im Rahmen der bekannten Maßnahmen wird mit einer möglichst kleinen Waschflüssigkeitsmenge gearbeitet. Zur Minimierung des Waschflüssigkeitsbedarfes wird häufig eine Füllkörperkolonne eingesetzt, die einen guten Stoffaustausch gewährleistet. Wird mit Meerwasser als Waschflüssigkeit gearbeitet, so liegt bei vorgegebenem Waschflüssigkeitsbedarf auch die zur Verfügung stehende Bicarbonatmenge fest. Sie reicht regelmäßig nur zur Bindung eines Bruchteils der absorbierten $SO_2$-Menge aus, während der weitaus größere Teil der $SO_2$-Menge als gelöstes, ungebundenes $SO_2$ mit der Waschflüssigkeit aus dem Flüssigkeitssumpf des Absorptionsturms abgezogen wird. Die Flüssigkeit ist außerdem - wegen des großen $CO_2$-Partialdruckes des Abgases - $CO_2$ gesättigt. Die Erfahrung lehrt, daß sich im Flüssigkeitssumpf des Absorptionsturms ein pH-Wert im Bereich pH 2 bis 3 einstellt. In dem Nachreaktionsbecken wird die aus dem Absorptionsturm abgezogene Waschflüssigkeit mit frischem Meerwasser versetzt, dessen Menge so bemessen ist, daß der Bicarbonat-Gehalt zur Neutralisation des abgeschiedenen Schwefeldioxids ausreicht. Der Inhalt des Nachreaktionsbeckens muß zwecks Sulfatbildung einerseits und $CO_2$-Austreibung andererseits intensiv belüftet werden. Große Luftmengen mit entsprechenden Verdichterkapazitäten sind erforderlich. Hinzu kommt, daß die pH-abhängige Oxidationsgeschwindigkeit in einem Bereich oberhalb pH 5,5, der im Nachreaktionsbecken anzutreffen ist, verhältnismäßig klein ist. Es muß folglich mit großen Becken gearbeitet werden, um eine für die vollständige Sulfatbildung ausreichende Verweilzeit der Flüssigkeit sicherzustellen. Die Praxis lehrt, daß das belüftete Nachreaktionsbecken für eine Verweilzeit von 10 bis 15 Minuten, ausgelegt werden muß, damit die Reaktionen vollständig ablaufen können. Ein weiteres Problem stellt eine zuweilen im Bereich des Nachreaktionsbeckens auftretende Geruchsbelästigung dar. Sie beruht darauf, daß ungebundenes $SO_2$ aus der in das Nachreaktionsbecken einströmenden Flüssigkeit, die aus dem Flüssigkeitssumpf des Absorptionsturms abgezogen wird, entweicht. Das ungebundene $SO_2$ läßt sich auch durch starke Belüftung kaum oxidieren.

EP-A-0 295 908 beschreibt ein Verfahren zum Abtrennen von $SO_2$ aus Abgasen wobei

(a) Abgas in einem Absorptionsturm mit Meerwasser beaufschlagt wird
(b) der Flüssigkeitssumpf des Absorptionsturms belüftet wird und dadurch in der Flüssigkeit enthaltende Bisulfite in Bisulfate umgewandelt werden (c) Flüssigkeit aus dem Flüssigkeitssumpf abgezogen und in einem Nachreaktionsbecken weiter behandelt wird
(d) die Flüssigkeit zur Teil zum Absorptionsturm zurückgeleitet wird.

Der Erfindung liegt die Aufgabe zugrunde, das eingangs beschriebene Verfahren so weiter auszubilden, daß mit einem kleineren Nachreaktionsbecken gearbeitet werden kann und eine Geruchsbelästigung durch freigesetztes $SO_2$ sicher ausgeschlossen ist. Außerdem wird eine Reduzierung der Oxidationsluftmenge angestrebt.

Gegenstand der Erfindung und Lösung dieser Aufgabe ist ein Verfahren zum Abtrennen von Schwefeldioxid aus einem Abgas,

wobei das Abgas in einem Absorptionsturm mit Meerwasser beaufschlagt wird,

wobei der Flüssigkeitssumpf des Absorptionsturms belüftet und dadurch in der Flüssigkeit enthaltene Bisulfite in Bisulfate umgewandelt werden,

wobei die Flüssigkeit aus dem Flüssigkeitssumpf des Absorptionsturms abgezogen und zum Zwecke der Sulfatbildung und Neutralisation in einem Nachreaktionsbecken mit frischem Meerwasser gemischt wird,

wobei der pH-Wert der aus dem Flüssigkeitssumpf des Absorptionsturms abgezogenen Flüssigkeit gemessen und Meßwertabweichungen von einem im Bereich von pH 4,0 bis pH 5 festgelegten pH-Sollwert bestimmt werden und wobei nach Maßgabe der Meßwertabweichungen ein unmittelbar dem Waschflüssigkeitssumpf zugeführter Meerwasserzusatzstrom oder ein aus dem Flüssigkeitssumpf in die Absorptionszone des Absorptionsturms zurückgeführter Flüssigkeitsstrom geregelt werden.

Vorzugsweise wird der pH-Sollwert des Flüssigkeitssumpfes im Bereich zwischen pH 4,15 und pH 4,5 festgelegt. Ferner wird in dem Nachreaktionsbecken durch Zugabe von frischem Meerwasser vorzugsweise ein pH-Wert von mindestens 6,0 eingestellt.

Bei dem erfindungsgemäßen Verfahren erfolgt die Oxidation der Entschwefelungsprodukte im Flüssigkeitssumpf des Absorptionsturms, wobei zugleich die dem Absorptionsturm insgesamt zugeführte Meerwassermenge so bemessen wird, daß der Bicarbonat-Gehalt für einen stöchiometrischen Umsatz des absorbierten Schwefeldioxids in Bisulfite ausreicht.

Die der Absorptionszone des Waschturmes zugeführte Waschflüssigkeitsmenge wird ohne Rücksicht auf die beschriebenen chemischen Reaktionen so bemessen, daß der Absorptionsturm einen vorgegebenen Wäscherwirkungsgrad, der als Verhältnis der $SO_2$-Ausgangskonzentration und der $SO_2$-Eingangskonzentration des Rauchgases definiert ist, erreicht. Vorzugsweise wird mit einem Absorptionsturm gearbeitet, der eine einbautenfreie Absorptionszone aufweist und für einen großen flächenspezifischen Flüssigkeitsdurchsatz ausgelegt ist. Ist die in der Absorptionszone erforderliche Waschflüssigkeitsmenge so klein, daß die im Meerwasser enthaltene Bicarbonatmenge zur chemischen Bindung des absorbierten Schwefeldioxids nicht ausreicht, ist die erfindungsgemäße Regelung des Meerwasserzusatzstromes, der unmittelbar dem Waschflüssigkeitssumpf zugeführt wird, erforderlich. Ist andererseits die für die Gaswäsche erforderliche Flüssigkeitsmenge bereits so groß, daß mit dem Meerwasser überstöchiometrische Mengen an Bicarbonaten zugeführt werden, so wird erfindungsgemäß ein Flüssigkeitsstrom aus dem Flüssigkeitssumpf in die Absorptionszone des Absorptionsturms zurückgeführt und mengenmäßig so geregelt, daß sich in dem Flüssigkeitssumpf des Absorptionsturm ein pH-Wert einstellt, der dem vorgegebenen Sollwert entspricht. Durch die Waschflüssigkeitsrückführung sind die im Absorptionsturm zur Verfügung stehende Bicarbonatmenge und die hydraulische Belastung der Absorptionszone des Turms unabhängig voneinander einstellbar. Es versteht sich, daß bei dieser Betriebsweise ein dem Waschflüssigkeitssumpf unmittelbar zugeführter Meerwasserzusatzstrom entfällt.

Bei dem erfindungsgemäßen Verfahren ist aufgrund der pH-Führung im Flüssigkeitssumpf des Absorptionsturms sichergestellt, daß in der aus dem Flüssigkeitssumpf abgezogenen Flüssigkeit kein ungebundenes $SO_2$ in Lösung vorliegt, welches bei der nachfolgenden Behandlung im Nachreaktionsbecken entweichen und zu einer Geruchsbelästigung führen kann. Das in der Absorptionszone abgeschiedene Schwefeldioxid wird im Flüssigkeitssumpf in Bisulfite bzw. durch die Sumpfbelüftung in Bisulfate umgesetzt. Die erfindungsgemäße Einstellung des pH-Wertes im Bereich pH 4,0 bis 5, vorzugsweise pH 4,15 und 4,5 gewährleistet eine maximale Bisulfit-Konzentration in dem verhältnismäßig kleinen Flüssigkeits-Teilstrom aus dem Absorptionsturm und schafft die Voraussetzungen für eine schnelle Umsetzung zu Bisulfaten. Aufgrund des stark sauren Milieus ist eine hohe Oxidationsgeschwindigkeit gewährleistet, so daß eine kurze Verweilzeit der Flüssigkeit im Flüssigkeitssumpf des Absorptionsturms ausreichend ist. Je nach Rauchgas und Meerwasserqualität beträgt die erforderliche Verweilzeit etwa 1 bis 2,5 Minuten. Aufgrund der erfindungsgemäß eingestellten optimalen Bedingungen (kleiner Flüssigkeitsstrom, größere Oxidationsgeschwindigkeit) ist die Oxidation im Waschflüssigkeitssumpf des Absorptionsturmes mit nur geringem anlagentechnischen Aufwand realisierbar. Aufgrund des kleinen Flüssigkeitsvolumens kann außerdem mit verhältnismäßig kleinen Oxidationsluftmengen gearbeitet werden.

Mit der Oxidationsluft wird die Flüssigkeit im Flüssigkeitssumpf des Absorptionsturms wirkungsvoll von Kohlendioxid befreit. Es erfolgt eine $CO_2$-Austreibung aus einer nahezu $CO_2$-gesättigten Lösung. Aus dem Flüssigkeitssumpf des Absorptionsturms wird ein teilneutralisiertes Abwasser mit dem Zwischenprodukt Bilsulfat abgezogen und in dem Nachreaktionsbecken mit frischem Meerwasser zwecks Vervollständigung der Neutralisation und Sulfatbildung vermischt. Eine Belüftung des Nachreaktionsbeckens ist in der Regel nicht mehr erforderlich, da einerseits die Oxidation der Bisulfite in Bisulfate bereits vollständig im Flüssigkeitssumpf des Waschturms durchgeführt worden ist und da außerdem durch die Belüftung des Flüssigkeitssumpfes bereits größere Mengen $CO_2$ aus der Waschflüssigkeit ausgetrieben wurden. Im Vergleich zu dem eingangs erläuterten Stand der Technik kann mit einem wesentlich kleineren Nachreaktionsbecken gearbeitet werden. Luftmenge und Energiebedarf für die Verdichtung der Oxidationsluft sind ebenfalls geringer.

Der zur Belüftung des Flüssigkeitssumpfes eingesetzte Luftstrom wird zweckmäßig vor Eintritt in den Waschflüssigkeitssumpf durch Wassereindüsung gekühlt.

Im folgenden wird die Erfindung anhand einer lediglich ein Ausführungsbeispiel darstellenden Zeichnung ausführlicher erläutert. Es zeigen schematisch

Fig. 1        ein Anlage zum Abtrennen von Schwefeldioxid aus Abgas,

Fig. 2 und 3        in der Anlage ablaufende chemische Reaktionen in Abhängigkeit der auf den Abgasstrom bezogenen Meerwassermenge,

Fig. 4        die Gleichgewichtsverteilung von gelöstem Schwefeldioxid, Bisulfit- und Sulfitionen im Meerwasser in Abhängigkeit des pH-Wertes.

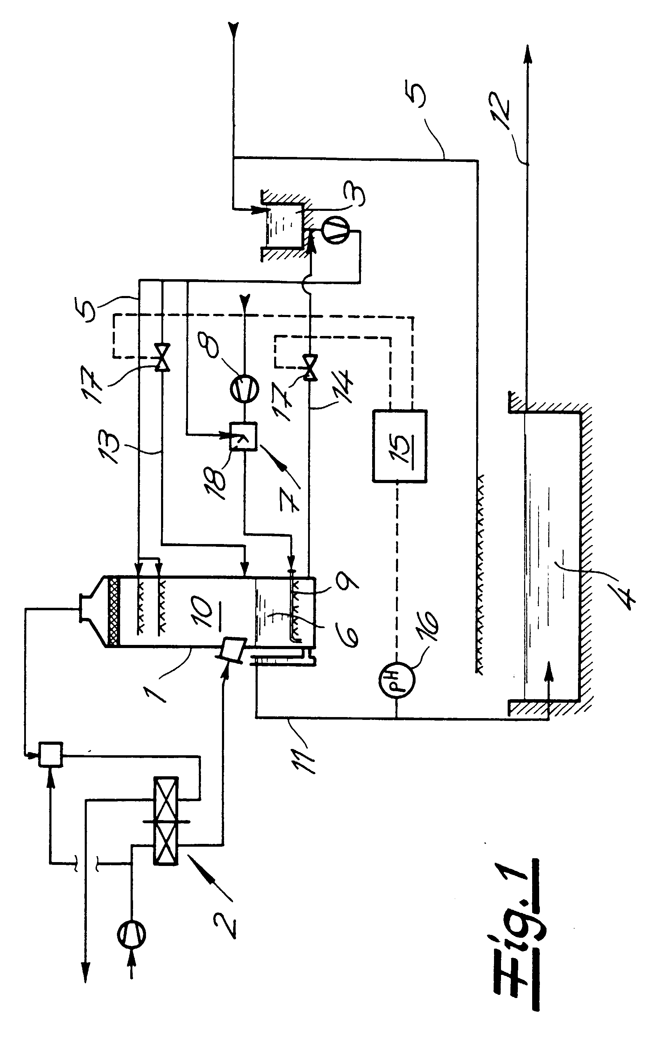

Zum grundsätzlichen Aufbau der in Fig. 1 dargestellten Anlage gehören ein Absorptionsturm 1 mit angeschlossenem Abgasleitungssystem 2, eine Meerwasserpumpstation 3, ein Nachreaktionsbecken 4, Meerwasserzuführleitungen 5 zum Absorptionsturm 1 und zum Nachreaktionsbecken 4 sowie eine an den Flüssigkeitssumpf 6 des Absorptionsturm 1 angeschlossene Belüftungseinrichtung 7 mit Luftverdichter 8 und im Flüssigkeitssumpf 6 angeordneten Luftlanzen 9. Der Absorptionsturm 1 ist im Ausführungsbeispiel als Gegenstromwäscher ausgelegt, wobei Meerwasser über eine oder mehrere Düsenebenen der Absorptionszone 10 des Turms zugeführt wird. Die Absorptionszone 10 des Turms weist keine Einbauten auf. Über eine Leitung 11 gelangt Flüssigkeit aus dem Flüssigkeitssumpf 6 des Absorbtionsturms 1 in das Nachreaktionsbecken 4. Aus dem Nachreaktionsbecken 4 wird behandeltes Abwasser 12 in das Meer zurückgeleitet.

Die Alkalinität von Meerwasser, die als $HCO_3^-$ üblicherweise angegeben wird, wird zur Bindung und Neutralisation der aus dem Abgas absorbierten $SO_2$-Menge ausgenutzt. Standard-Meerwasser mit einer Chlorinität von 19 g/kg beitzt einen $HCO_3$-Gehalt von 0,14 g/kg. Je nach der Herkunft des Meerwassers kann der Bicarbonat-Gehalt bis zu 0,32 g/kg (arabischer Golf) betragen, wobei die genannten Werte Mittelwerte darstellen, von denen erhebliche örtliche Abweichungen, zum Beispiel in Meeresbuchten oder in der Nähe von Flußmündungen vorkommen (ULLMANN, Band 24, Seiten 213/214).

Das Abgas wird im Absorptionsturm 1 mit Meerwasser beaufschlagt, wobei das im Abgas enthaltene gasförmige Schwefeldioxid in dem als Waschflüssigkeit eingesetzten Meerwasser physikalisch absorbiert wird:

$$SO_2(gas) \xrightarrow{\quad + \ H_2O \quad} SO_2(L)\text{gelöst}$$

Die dem Absorptionsturm insgesamt zugeführte Meerwassermenge ist so bemessen, daß die im Meerwasser enthaltenen Bicarbonate nur für einen stöchiometrischen Umsatz des absorbierten Schwefeldioxids in Bisulfite ausreichen. Der Flüssigkeitssumpf 6 des Absorptionsturms 1 wird belüftet, wodurch die Bisulfite in Bisulfate umgewandelt werden. Im Flüssigkeitssumpf 6 erfolgt eine Teilreaktion und Oxidation, die durch die folgende Summengleichung vereinfacht wiedergegeben ist:

$$SO_2(L) + O(L) + HCO_3^- \rightarrow HSO_4^- + CO_2(L)$$

Die Bisulfate enthaltende Flüssigkeit wird aus dem Flüssigkeitssumpf 6 des Absorptionsturms 1 abgezogen und zum Zwecke der Sulfatbildung und pH-Einstellung in dem Nachreaktionsbecken 4 mit frischem Meerwasser beaufschlagt. Die Sulfatbildung im Nachreaktionsbecken 4 kann vereinfacht durch die folgende Summengleichung wiedergegeben werden:

$$HSO_4^- + HCO_3^- \rightarrow SO_4^- + H_2O + CO_2(L).$$

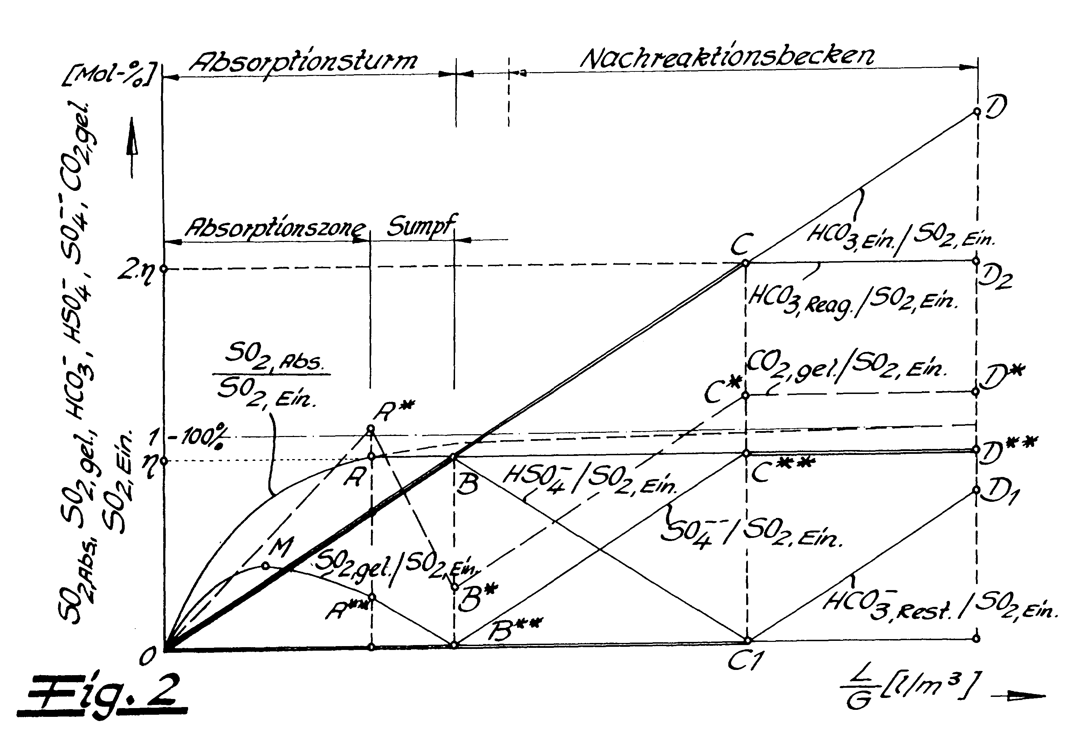

Die in der Anlage ablaufenden chemischen Reaktionen sind in Fig. 2 modellhaft dargestellt. Auf der Abszisse ist die der Anlage zugeführte Meerwassermenge bezogen auf den; Abgasvolumenstrom L/G in $l/m^3$ aufgetragen. Auf der Ordinate sind die Mol-Mengen der Ausgangs- und Reaktionsprodukte, jeweils bezogen auf die Mol-Menge von $SO_2$ im

Abgas in Mol-% dargestellt. Der Wäscherwirkungsgrad $\eta$ ist ebenfalls angegeben. Aufgetragen sind

als Kurvenzug OABC**D** die abgeschiedene $SO_2$-Menge ($SO_{2,\,Abs.}/SO_{2,\,Ein.}$).

als Kurvenzug OBCD die zudosierte Bicarbonat-Menge ($HCO_{3,\,Ein.}^-/SO_{2,\,Ein.}$), wobei der Linienzug $OBCD_2$ die insgesamt umgesetzte Bicarbonat-Menge ($HCO_{3,\,reagiert}^- / SO_{2,Ein.}$) und der Linienzug OB den im Absorptionsturm allein umgesetzten Anteil wiedergibt,

als Kurvenzug OMA**B** der Anteil an freiem $SO_2$ in der Lösung ($SO_{2,\,gel}/SO_{2,Ein.}$), welcher der Differenz zwischen abgeschiedenem $SO_2$ und reagiertem Bicarbonat entspricht,

als Linienzug $C_1D_1$ überschüssiges, nicht reagiertes Bicarbonat ($HCO_{3,Rest}^-$ / $SO_{2,Ein.}$) im Nachreaktionsbecken,

als Linienzug $OBC_1$ die Zu- und Abnahme der Bisulfate ($HSO_4^-$ / $SO_{2,Ein.}$) im Flüssigkeitssumpf des Absorptionsturms bzw. im Nachreaktionsbecken,

als Linienzug $B^{**}C^{**}$ die korrespondierende Zunahme der Sulfate ($SO_4^-$/ $SO_{2,Ein.}$) im Nachreaktionsbecken,

als Linien $OA^*$, $A^*B^*$, $B^*C^*$ der Gehalt an gelöstem $CO_2$ in der Flüssigkeit ($CO_{2,gel}$ / $SO_{2,Ein.}$).

In der Absorptionszone 10 des Absorptionsturmes 1 erfolgt eine $CO_2$-Sättigung des Meerwassers (Linie $OA^*$). Im Flüssigkeitssumpf wird $CO_2$ durch Oxidationsluft ausgetrieben (Linie $A^*B^*$). Durch die Nachreaktion erfolgt im Nachreaktionsbecken 4 wieder eine Anreicherung hinsichtlich gelösten Kohlendioxids im Abwasser (Linie $B^*C^*$). Für den pH-Wert des aus dem Nachreaktionsbecken 4 abgezogenen Abwassers 12 sind hauptsächlich die Konzentrationen von freiem $CO_2$ (Punkt $D^*$) und Überschuß-Bicarbonat (Punkt $D_1$) maßgebend. Sie können am besten durch Erhöhung der insgesamt eingesetzten Meerwassermenge beeinflußt werden. Daneben ist auch eine begrenzte Beeinflussung durch $CO_2$-Austreibung in dem Nachreaktionsbecken 4 möglich.

Die Fig. 2 bezieht sich auf eine Betriebsweise der Anlage, bei der das Meerwasser in Teilströmen dem Absorptionsturm 1 zugeführt wird. Ein erster Teilstrom wird als Waschflüssigkeit einer oder mehrerer Düsenebenen der Absorptionszone 10 des Turmes zugeführt. Die Bicarbonat-Menge der Waschflüssigkeit reicht zur vollständigen chemischen Bindung der absorbierten $SO_2$-Menge nicht aus. Ein Meerwasserzusatzstrom wird zum Ausgleich des Bicarbonat-Bedarfes über eine Leitung 13 direkt in den Flüssigkeitssumpf 6 eingespeist.

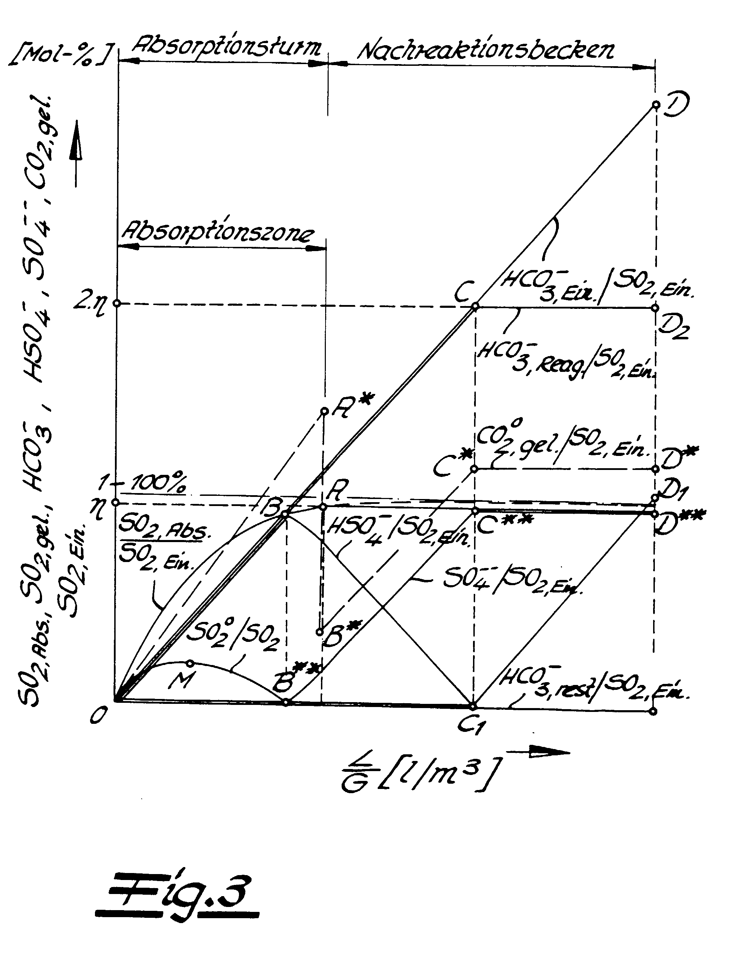

Es kann auch der Fall auftreten, daß die für die Gaswäsche in der Absorptionszone erforderliche Flüssigkeitsmenge so groß ist, daß bei Verwendung von Meerwasser als Waschflüssigkeit mit dem Flüssigkeitszulauf 5 überstöchiometrische Mengen an Bicarbonaten dem Absorptionsturm 1 zugeführt werden. Dieser Fall tritt vor allem dann auf, wenn die $SO_2$-Konzentration im Abgasstrom niedrig ist und ein Meerwasser mit hohem Bicarbonatanteil zur Verfügung steht. In einem solchen Fall lehrt die Erfindung, daß zur Reduzierung einer überstöchiometrischen Bicarbonatmenge ein Flüssigkeitsstrom durch eine Rückführleitung 14 aus dem Flüssigkeitssumpf 6 in die Absorptionszone 10 zurückgeführt wird. Durch die Waschflüssigkeitsrückführung sind die im Absorptionsturm 1 zur Verfügung stehende Bicarbonatmenge und die hydraulische Belastung der Absorptionszone 10 des Turms unabhängig voneinander einstellbar. Die Fig. 3 zeigt die chemischen Abläufe in der Anlage für diesen Fall. Die Frischwasserdosierung mittels Leitung 13 zum Flüssigkeitssumpf 6 des Absorptionsturms 1 entfällt. Die Sulfatbildungsreaktion findet, wie aus Fig. 3 ersichtlich ist, bereits zum Teil im Flüssigkeitssumpf 6 des Absorptionsturmes statt. Mit Hilfe des aus dem Flüssigkeitssumpf 6 in die Absorptionszone 10 zurückgeführten Flüssigkeitsstromes 14 kann die für die chemischen Reaktionen zur Verfügung stehende Bicarbonat-menge gesteuert werden.

Sowohl der Meerwasserzusatzstrom 13 als auch der aus dem Flüssigkeitssumpf 6 in die Absorptionszone 10 zurückgeführte Flüssigkeitsstrom 14 sind regelbar. Die Mengenregelung erfolgt in Abhängigkeit des pH-Wertes der aus dem Flüssigkeitssumpf 6 abgezogenen Flüssigkeit. Zu diesem Zweck weist die in Fig. 1 dargestellte Anlage eine Meßund Regeleinrichtung 15 mit einem Meßgeber 16 für die pH-Istwert-Erfassung sowie Regeleinrichtungen 17 für die Mengenregelung des Meerwasserzusatzstromes sowie des aus dem Flüssigkeitssumpf 6 in die Absorptionszone 10 zurückgeführten Flüssigkeitsstrom 14 auf. Der pH-Wert der aus dem Flüssigkeitssumpf 6 des Absorptionsturmes 1 abgezogenen Flüssigkeit wird gemessen und es werden Meßwertabweichungen von einem im Bereich pH 4,15 bis pH 4,5 festgelegten Sollwert bestimmt. Nach Maßgabe dieser Meßwertabweichungen wird der dem Flüssigkeitssumpf 6 zugeführte Meerwasserzusatzstrom 13 oder der aus dem Flüssigkeitssumpf 6 in die Absorptionszone 10 zurückgeführte Flüssigkeitsstrom 14 mengenmäßig geregelt. Durch die pH-abhängige Mengenregelung wird der pH-Wert des Flüssigkeitssumpfes 6 in einem engen Toleranzbereich zwischen pH 4,15 und pH 4,5 konstant gehalten.

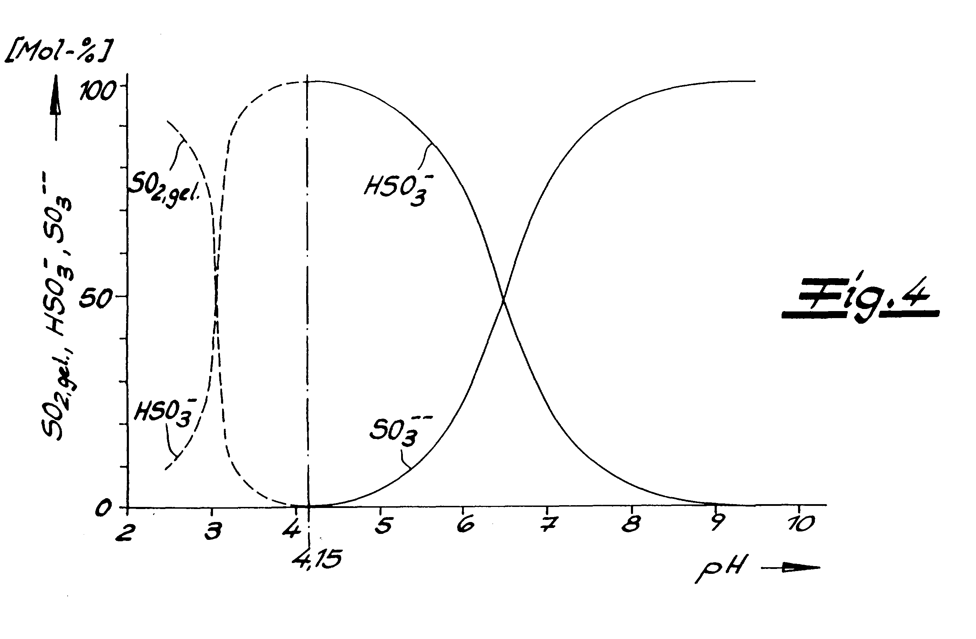

Die erfindungsgemäße Regelung wird anhand der in Fig. 4 dargestellten Gleichgewichtsverteilung von gelöstem, ungebundenem $SO_2$, Bisulfit und Sulfit-Ionen im Meerwasser verständlich. Der Fig. 4 entnimmt man, daß bei dem verwendeten Meerwasser die maximale Bisulfitkonzentration bei pH 4,15 zu erwarten ist. Bei geringerem pH-Wert sind noch Reste an gelöstem, ungebundenem $SO_2$ in Lösung zu finden, während bei höheren pH-Werten kleinere Mengen an Sulfit-Ionen anzutreffen sind. Durch das erfindungsgemäße Verfahren, welches eine genaue Dosierung und Regelung des Meerwassers vorsieht, wird sichergestellt, daß das in der Waschflüssigkeit abgeschiedene $SO_2$ vollständig gebunden wird und nicht als freies, ungebundenes $SO_2$ in Lösung vorliegt. Durch die erfindungsgemäße pH-Einstellung und im Bereich pH 4,15 und pH 4,5 ist ferner gewährleistet, daß der pH-Wert der aus dem Absorptionsturm 1 abgezogenen und dem Nachreaktionsbecken 4 zugeführten Waschflüssigkeit sehr nahe an dem für die Bisulfitbildung optimalen Punkt liegt. Die erfindungsgemäßen Maßnahmen haben zur Folge, daß die in das Nachreaktionsbecken eingeleitete Flüssigkeit geruchsfrei ist, weil gasförmiges $SO_2$ nicht freigesetzt werden kann, und daß die angestrebte Oxidation im Flüssigkeitssumpf 6 aufgrund der dort herrschenden hohen Bisulfitkonzentration sehr schnell abläuft. Aufgrund der großen Oxidationsgeschwindigkeit kann mit kurzen Verweilzeiten der Flüssigkeit im Flüssigkeitssumpf 6 gearbeitet werden. Je nach Rauchgas und Meerwasserqualität ist eine Verweilzeit zwischen 1 und 2,5 Minuten ausreichend.

In dem Nachreaktionsbecken 4 wird durch Zugabe von frischem Meerwasser ein pH-Wert zwischen pH 6,0 und pH 7 eingestellt. Von dem insgesamt der Anlage zugeführten Meerwasser entfallen etwa 1/3 auf den Waschturm 1 und etwa 2/3 auf das Nachreaktionsbecken 4. Da die Oxidation in den Waschflüssigkeitssumpf 6 verlegt ist, kann im Vergleich zum Stand der Technik, bei dem die Oxidation im Nachreaktionsbecken 4 erfolgt, mit wesentlich kleineren Luftmengen gearbeitet werden. Zweckmäßig erfolgt eine Kühlung des zur Belüftung eingesetzten Luftstromes durch Wassereindüsung. Zu diesem Zweck umfaßt die Belüftungseinrichtung 7 eine Mischkammer 18 für Quenchwasser, wobei als Quenchwasser Meerwasser einsetzbar ist.

## Patentansprüche

1. Verfahren zum Abtrennen von Schwefeldioxid aus Abgas,

   wobei das Abgas in einem Absorptionsturm mit Meerwasser beaufschlagt wird,

   wobei der Flüssigkeitssumpf des Absorptionsturms belüftet und dadurch in der Flüssigkeit enthaltene Bisulfite in Bisulfate umgewandelt werden,

   wobei die Flüssigkeit aus dem Flüssigkeitssumpf des Absorptionsturms abgezogen und zum Zwecke der Sulfatbildung und Neutralisation in einem Nachreaktionsbecken mit frischem Meerwasser gemischt wird,

   wobei der pH-Wert der aus dem Flüssigkeitssumpf des Absorptionsturms abgezogenen Flüssigkeit gemessen wird sowie Meßwertabweichungen von einem im Bereich von pH 4,0 bis pH 5 festgelegten Sollwert bestimmt werden und

   wobei nach Maßgabe der Meßwertabweichungen ein unmittelbar dem Waschflüssigkeitssumpf zugeführter Meerwasserzusatzstrom oder ein aus Flüssigkeitssumpf in die Absorptionszone des Absorptionsturms zurückgeführter Flüssigkeitsstrom geregelt werden.

2. Verfahren nach Anspruch 1, wobei der pH-Sollwert des Flüssigkeitssumpfes im Bereich zwischen pH 4,15 und pH 4,5 festgelegt wird.

3. Verfahren nach Anspruch 1 1 oder 2, wobei in dem Nachreaktionsbecken durch Zugabe von frischem Meerwasser ein pH-Wert von mindestens pH 6 eingestellt wird.

4. Verfahren nach einem der Ansprüche 1 bis 3, wobei mit einem Absorptionsturm gearbeitet wird, der eine einbautenfreie Absorptionszone aufweist.

5. Verfahren nach einem der Ansprüche 1 bis 4, wobei der zur Belüftung des Flüssigkeitssumpfes eingesetzte Luftstrom durch Wassereindüsung gekühlt wird.

## Claims

1. A process for separating sulphur dioxide from waste gas,

   wherein the waste gas is acted upon by seawater in an absorption tower,

   wherein the liquid bottom of the absorption tower is aerated and bisulphites contained in the liquid are thereby converted into bisulphates,

   wherein the liquid is drawn off from the liquid bottom of the absorption tower and is mixed with fresh seawater in a secondary reaction pond for the purpose of sulphate formation and neutralisation,

   wherein the pH of the liquid drawn off from the liquid bottom of the absorption tower is measured and differences of the measured readings from a set value which is fixed within the range from pH 4.0 to pH 5 are determined, and

wherein a seawater addition stream which is fed directly to the scrubbing liquor bottom, or a liquid stream which is recycled from the liquid bottom into the absorption zone of the scrubbing tower, is controlled according to the differences of the measured readings.

2.  A process according to claim 1, wherein the pH set value of the liquid bottom is fixed within the range between pH 4.15 and pH 4.5.

3.  A process according to claims 1 or 2, wherein a pH of at least pH 6 is set in the secondary reaction pond by the addition of fresh seawater.

4.  A process according to any one of claims 1 to 3, wherein an absorption tower is employed which comprises an absorption zone free from built-in items.

5.  A process according to any one of claims 1 to 4, wherein the air current which is used for aerating the liquid bottom is cooled by the injection of water.

**Revendications**

1.  Procédé permettant de séparer le dioxyde de soufre des effluents gazeux,

    de l'eau de mer étant admise dans une tour d'absorption contenant les effluents gazeux,

    le puits de récupération de liquide de la tour d'absorption étant aéré de sorte que les sulfites acides contenus dans le liquide sont transformés en sulfates acides,

    le liquide étant soustrait du puits de récupération de liquide de la tour d'absorption puis mélangé à de l'eau de mer fraîche dans un bassin de réaction ultérieure pour formation de sulfate et neutralisation,

    la valeur pH du liquide soustrait du puits de récupération de liquide de la tour d'absorption étant mesurée et les écarts des valeurs mesurées par rapport à une valeur de consigne comprise entre un pH de 4,0 et de 5 étant déterminées et

    un courant d'eau de mer supplémentaire directement alimenté dans le puits de récupération de liquide de lavage ou un courant de liquide provenant du puits de récupération de liquide et alimenté dans la zone d'absorption de la tour d'absorption étant réglés en fonction des écarts des valeurs mesurées.

2.  Procédé selon revendication 1, la valeur de consigne du pH du puits de récupération de liquide étant comprise entre un pH de 4,15 et de 4,5.

3.  Procédé selon revendication 1 ou 2, une valeur pH d'au moins 6 étant réglée en ajoutant de l'eau de mer fraîche dans le bassin de réaction ultérieure.

4.  Procédé selon l'une des revendications 1 à 3, la tour d'absorption utilisée présentant une zone d'absorption exempte d'ouvrages accessoires.

5.  Procédé selon l'une des revendications 1 à 4, le jet d'air utilisé pour aérer le puits de récupération de liquide étant refroidi en injectant de l'eau.

Fig.1

Fig.2

Fig.3

Fig. 4